# EUROPEAN PATENT APPLICATION

(11) **EP 2 586 292 A1**
(43) Date of publication of application: **01.05.2013**
(21) Application number: 12190198.7
(22) Date of filing: 26.10.2012
(51) Int. Cl.: A01G 31/00, A01G 9/10, E21C 49/04

(54) **Method for producing plant substrate or litter material**

(30) Priority: 27.10.2011 FI 20116055
(71) Applicant: VAPO OY, 40100 Jyväskylä (FI)
(72) Inventor: Korpi, Juha, 40420 Jyskä (FI); Mutka, Kari, 40250 Jyväskylä (FI); Nevalainen, Niko, 40270 Palokka (FI); Reinikainen, Olli, 40200 Jyväskylä (FI); Suoaro, Matti, 71800 Siilinjärvi (FI); Virolainen, Jyri, 40200 Jyväskylä (FI)
(74) Representative: Helke, Kimmo Kalervo

(57) **Abstract**

The invention relates to a method for producing plant substrate or litter material, in which method organic material (15) is detached mechanically from a lifting area (10), the detached material (15) is stored, after storage, the material (15) is sent for further processing. The organic material is mainly moss biomass (15), which is detached when it is in a frozen state.

## Description

The present invention relates to a method for producing plant substrate or litter material, in which method
- organic material is detached mechanically from a lifting area,
- the detached material is stored,
- after storage, the material is sent for further processing.

A method for producing plant substrate material is known from the applicant's international patent application publication WO 2009/118458 A1. In it, the plant substrate material is peat lifted from a bog. Lifting takes place by detaching the peat mechanically in blocks from the bog. The method is rough if it is examined, for example, in terms of the renewability of the bog. In addition, before the peat is lifted the bog must be drained. In practice, draining slows, or at least hinders the renewability of the bog.

The invention is intended to create a new type of method for producing a plant substrate or litter material, which is simple to implement. The characteristic features of the method according to the invention are stated in Claim 1.

In the invention, the organic material detached from a lifting area to form a plant substrate or litter material is mainly moss biomass, which is detached when it is frozen. Thus, the peat layer of the lifting area, which is under the moss biomass layer, remains untouched. The utilization of the method and the lifting conditions applied in it mean that the lifting area need not be drained in order to dry it. The method according to the invention does not therefore cause effects in river systems.

According to one embodiment, when the moss biomass is detached, at least part of the living moss biomass can be left on top of the peat layer. In this way, the renewability of the lifting area is accelerated and a relatively rapidly growing moss layer arises on it.

Detaching the moss biomass when it is frozen gives many significant advantages. It provides better opportunities to control the layer thickness in the lifting of the moss biomass. In addition, it can also be used to ensure that living moss vegetation remains on top of the peat layer. And even more, the frozen moss material remains more cohesive after detaching. This makes it easier to process. The frozen driving track also provides more support and thus also for its part permits leaving the lifting area undrained. At some sites, cleaner moss material can be obtained by clearing the snow from the lifting area. In addition, snow removal also permits control of the thickness of the frozen layer. Other additional advantages achieved by means of the invention appear in the description portion and its specific features from the accompanying Claims.

The invention, which is not restricted to the embodiments presented in the following, is described in greater detail with reference to the accompanying drawings, in which
- Figure 1: shows a schematic diagram of a lifting area as a cross-section, at different stages of the method,
- Figure 2: shows examples of the method as a flow diagram,
- Figure 3: shows a schematic diagram of the lifting of the material, seen from above the lifting area,
- Figure 4: shows a schematic diagram of the equipment used for lifting the material, and
- Figure 5: shows a more detailed cross-section of the lifting area.

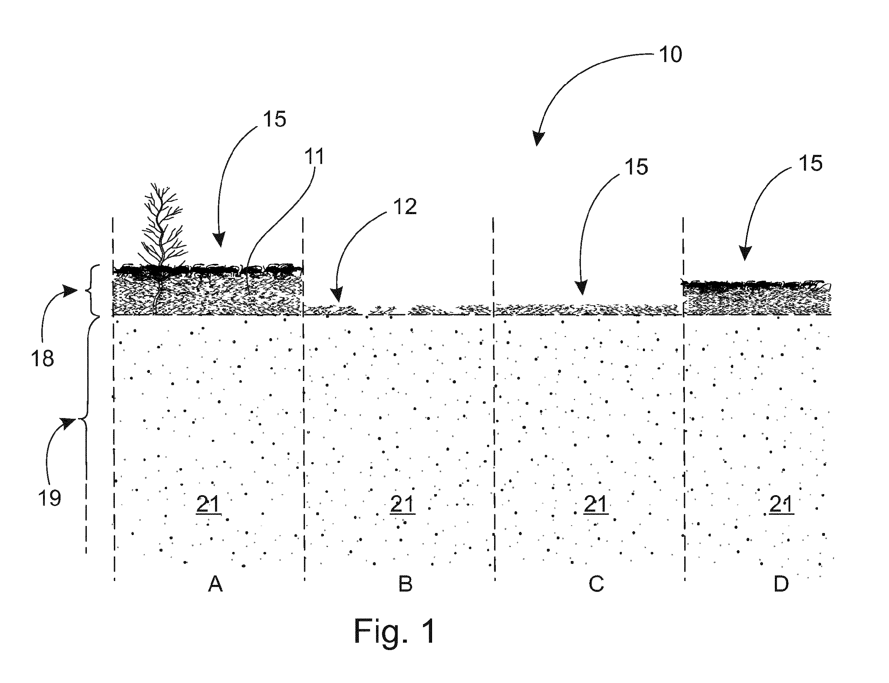

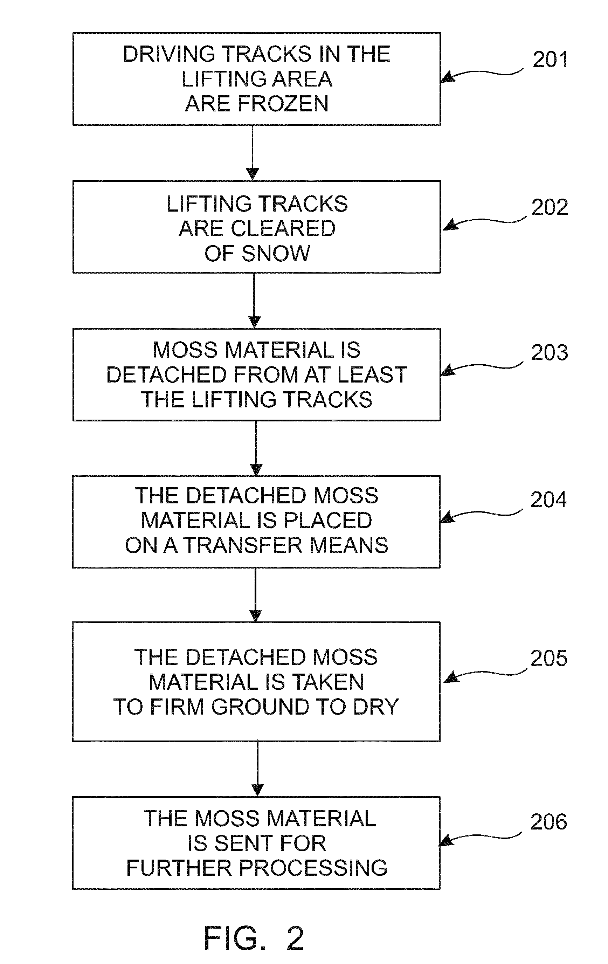

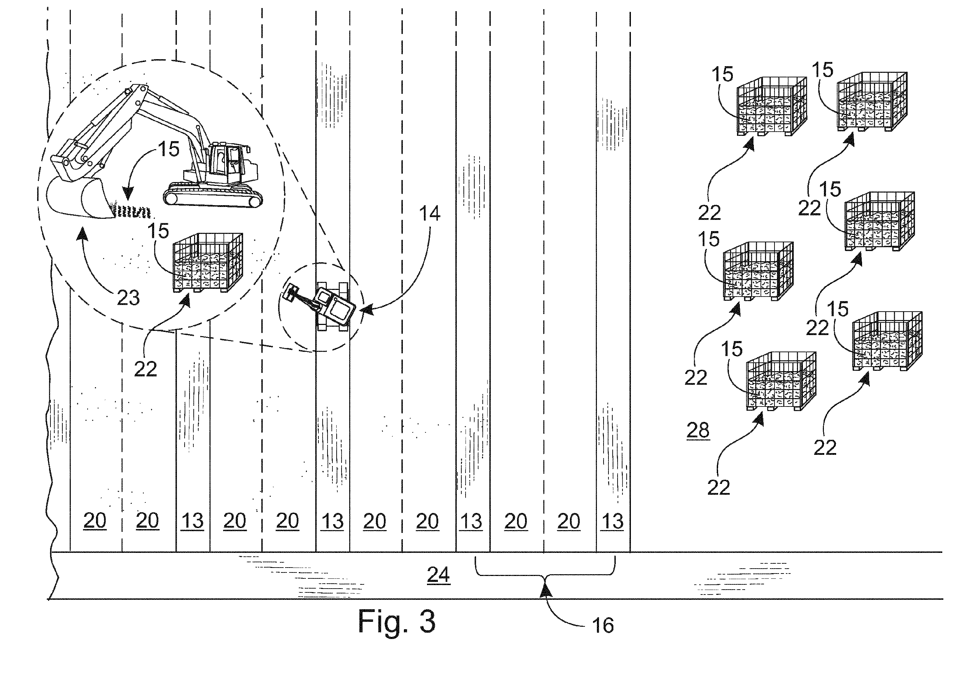

In the following, the invention is described in the light of an example, with reference to Figures 1 - 3. Figure 1 shows a bog area as a schematic cross section at various stages A - D of the production method for plant substrate or litter material, as a kind of timeline. Correspondingly, Figure 2 shows one example of an application of the method as a flow diagram, and Figure 3 shows the lifting area 10 seen from above during production.

The farthest left-hand area A of Figure 1 shows the bog area 10 in the initial situation, in production according to the method. Production can be directed to barren bog areas 10, in which the surface vegetation is primarily Sphagnum-moss. The bog areas 10 are mainly in a natural state. In connection with the invention, a natural state can also be understood as a slightly disturbed natural state. Thus, the bog area 10 can be, for example, drained here and there, but the area 10 is not, however, suitable for forestry use, for example. The water economy of such bog areas is typically stabilized and they lack, for example, drainage ditching. Thus they are typically undrained areas. An undrained area is not ditched, for example by leading water off it efficiently, for example, in a manner known from traditional peat production techniques.

On the bog area, there are in layers, itemized starting from its surface 11, a growing living Sphagnum-moss layer 18 and a peat layer 19. The Sphagnum-moss layer 18 can be mainly of Sphagnum-moss, but in it there can also be additionally other surface vegetation, such as sedge and twigs. The moss biomass layer 18 grows continuously from its upper part and dies/decays from its lower part. As it decays, the moss partly decomposes and the undecomposed part forms peat 21 (anaerobic process).

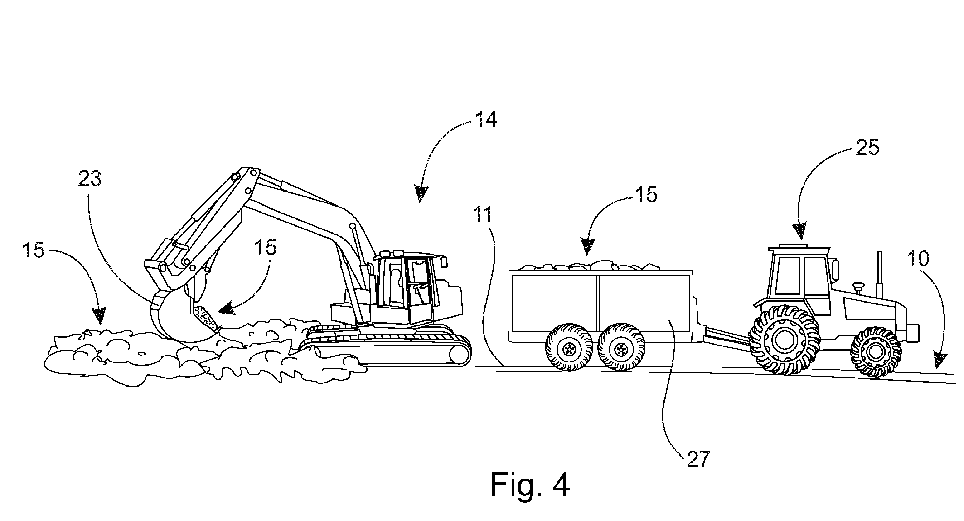

Production according to the invention can be practised particularly during the frost season, or generally when the load-bearing capacity of the surface 11 of the bog 10 has improved due to weather conditions. Operation during the frost season will ensure a higher load-bearing capacity for the work machines 14 (Figures 3 and 4) operating on a lifting area 10 mainly in a natural state and, on the other hand, will also improve the detaching precision and cohesion of the organic material removed from the bog 10.

As stage 201 of the method, it is possible to make driving tracks 13 (Figure 3) to the selected lifting area 10 of the bog, for example, at the start of the frost season for the mechanical detaching of organic material 15. The freezing of the driving tracks 13 can take place spontaneously once the frost season has started, or it can also be assisted, for example by removing snow from the driving tracks 13 and compacting the snow layer, for example by tamping with a work machine 14 to promote the freezing of the driving tracks 13. In other ways too, the thickness of the frozen layer can, according to the invention, be 'adjusted' by clearing the surface 11 of the bog 10 of snow in areas.

According to Figure 3, at least one collector driving track 24 can be made on the lifting area 10, from which the driving tracks 13 diverge as branch tracks. Driving and lifting tracks 13, 20 are formed in a parallel arrangement on the lifting area 10, in such a way that there are two lifting tracks 20 between the driving tracks 13. In the arrangement, the mutual distance 16 of the driving tracks 13 following each other can be set, for example, according to the reach of the work machine 14 to be used for detaching. In that case, the distance 16 in the arrangement from one driving track 13 to the next can be, for example, twice the lifting reach of the work machine 14. By means of such an arrangement, the entire area between the lifting tracks 20 can be handled from the driving tracks 13 on each side of it.

Once the driving tracks 13 have been frozen to achieve a suitable load-bearing capacity, snow can be removed from the surface 11 of the lifting area 10 prior to detaching the moss biomass 15, as stage 202 of the method. The removal of snow from the surface 11 of the lifting area 10 also surprisingly allows the removal of possible surface vegetation. The removal of surface vegetation can refer to, for example, the removal of other vegetation, such as sedge and twigs growing on or above the surface of the moss layer 18, from the lifting area 10, for example, from the lifting tracks 20 located on both sides of the driving tracks 13. Clearing the surface vegetation will leave cleaner moss 15 on the surface 11 of the lifting area 10. When it freezes onto the snow blanket on the surface of the lifting area 10, surface vegetation can better removed along with the snow, thus leaving cleaner moss material 15. However, the cleanliness of the moss 15 is primarily affected by selecting a suitable lifting site with little surface vegetation. Snow removal can be performed already in connection with the freezing stage 201, or even before it, when even more effective freezing will be created and thus a surface layer with a greater load-bearing capacity.

As a result of stage 202, the lifting area A shown in Figure 1 is obtained and it is then possible to move to state 203. In it, organic material 15 with a relatively high moisture content is detached mechanically from the lifting area 10, which is mainly in a natural state. More than 85 %, and even more particularly more than 90 % are examples of the moisture content. Now the organic material is mainly moss biomass 15, which is on the surface 11 of the lifting area 10. By detaching of moss biomass 15 from the surface 11 of the lifting area 10, there is no need at all to drain the lifting area 10 or otherwise prepare it for lifting, for example to dry it. Lifting can take place, for example, using the bucket 23 of a excavator 14 from the driving track 13 from the lifting track 20 on each side of it.

When detaching the moss biomass 15 from the surface 11 of the lifting area 10 when it is frozen, the detachment depth of the moss biomass 15 and the amount of the moss biomass detached can be precisely controlled. Typically, the living moss biomass vegetation is at a depth of a few tens of centimetres, for example 10 - 40 cm, most typically 20 - 30 cm. Lifting, snow removal, and freezing can be arranged in such a way that they permit lifting from a depth of, for example, 25 cm (generally 10 - 35 cm), while also leaving, however, living vegetation 12 on the surface 11 of the lifting area 10. The renewal of the living vegetation 12 is also increased by the moss pieces remaining in the lifting area 10.

Figure 4 shows a schematic diagram of the equipment used to lift and remove the moss biomass 15. In this case, the bucket 23 of an excavator 14 is used to lift the moss biomass 15, for example, onto the trailer 27 of a tractor 25, into a cage (reference number 22 Figure 3) or a corresponding base, which is on the frozen bog 10 and which cuts off capillary action. Thus, as stage 204 of the method, the detached moss biomass 15 is placed on a transfer means 22, 27, using which the moss biomass 15 can be transported away from the lifting area 10, and in which it can possibly even be dried too. The cage 22 or trailer 27 also permits the batch to be transported, for example in the cage 22 or on the trailer 27 to firm ground 28, from where it can be collected, for example, during summer. When using cages 22, there is no need to move the material 15 from one base to another during its transportation or storage, when it is transported away from the lifting area 10. The biomass 15 can be tipped from the trailer into, for example, a frame on firm ground 28.

After the detaching of the moss material 15 of the lifting tracks 20, in stage 203 the moss biomass 15 can also be detached from the driving tracks 13 when leaving them. Thus, the entire lifting area 10 can be exploited, if so desired. This will minimize the loading on the bog 10 caused by the work machine 14.

As stage 205, after the detaching of the moss biomass 15, the detached moss biomass 15 can be stored at the same time as it is dried. The storage stage of the moss biomass 15 can take place on firm ground 28 outside the lifting area 10. Storage can take place by means of a base separated from the ground surface. An example of a base according to figure 2 is a pallet 22 with a cage or similarly equipped, which is easy to move, for example using a fork-lift device. By storing and drying the moss biomass 15 outside the lifting area 10, the lifting area 10 is no longer stressed later by traffic.

Drying is performed, for example, in such a way that as little water as possible enters the moss biomass 15 from above and below. Thus, the stored moss biomass 15 being dried can be mainly isolated from rain and surface water. As stage 206, after storage the material 15 is sent for further processing, for example to create plant substrate or litter material. One criterion for the termination of storage can be, for example, the moisture content 15 of the material. The plant substrate material is used, for example, as a growing substrate for plants, and litter, for example, as bedding for animals. In some further processing applications, it is, of course, possible to use even very damp Sphagnum-moss.

Instead of removing all the living moss biomass from the surface 11 of the lifting area 10 in stage 203, at least part of the living moss biomass 12 can be left on the surface 11 of the lifting area 10 when detaching the moss biomass 15. Area B in Figure 1 represents the situation after stage 203. The living moss material vegetation 12 left on the surface 11 of the lifting area 10 continues its natural growth and thus promotes the renewal of the moss layer 18. The remaining moss 12 leads to new growth in all the lifting locations from which the moss biomass has been removed and results in area C according to Figure 1. After a few decades, the lifting area 10 will again be in state D, in which its surface 11 is mostly entirely covered in moss biomass 15 and its layer thickness has increased. The cycle can be, for example, in the order of 20 - 25 years.

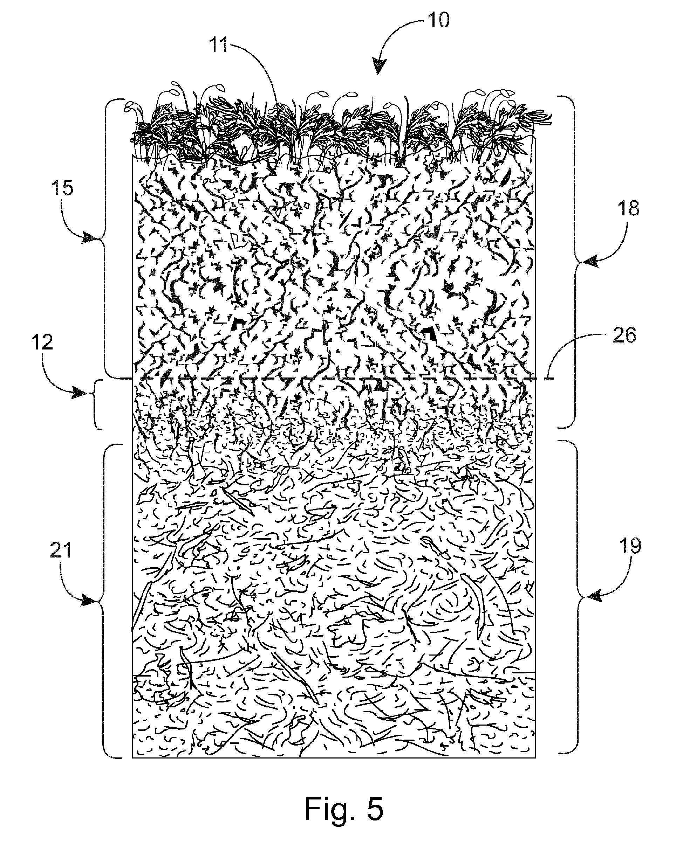

Figure 5 shows in greater detail examples of the layering of the lifting area 10. Moss biomass 15 is detached and lifted from the living Sphagnum-moss layer 18 on the surface 11 of the lifting area 10. The moss layer 18 becomes a peat layer 19 at a greater depth. The boundary between the layers is not necessarily at all sharply defined. By arranging the lifting depth of the moss biomass 15 so that it is lifted from clearly above the peat layer 19 (boundary line 26), living moss biomass 12 can be left on the surface of the peat layer 19.

The thickness of the frozen layer, i.e. the freezing depth of the lifting area 10, can be arranged, for example, according to the lifting depth of the lifting track 20 (boundary line 26). The moss biomass 15 can then be lifted in a more cohesive form, compared, for example, to lifting when the ground is frost-free. Thus, the moss biomass 15 is detached when the frost boundary (for example boundary line 26) is in the area of the moss biomass layer 18. In addition, the frozen moss biomass 15 will also detach more cleanly from above the peat layer 19 than, for example, during the frost-free period. This also makes lifting more precise and does not place such great demands on, for example, the work of the machine operator. Correspondingly, the thickness of the frozen layer in the driving track 13, i.e. the depth of freezing, can be arranged, for example, to adapt the load-bearing capacity of the driving tracks 13 to the lifting machine 14 and the transport machine 25, 27. Then too a cohesion advantage will be obtained in the moss material 15 being collected. Thus the thickness of the frozen layer of the lifting area 10 can be arranged in at least part of the lifting area 10 (driving tracks 13) to carry the weight of the lifting and transport machines 14, 25, 27 and in at least part of the lifting area 10 (lifting tracks 20) according to the layer thickness of the moss biomass 15 it is intended to detach (boundary line 26).

The plant substrate material produced according to the method of the invention can be further processed before use as a plant substrate in, for example, garden production. Further processing can include, for example, milling, sieving, liming, fertilizing, and other similar operations. Promising results have been obtained in growing tests with various plants in the germination and growth of the plants compared to known substrates of the prior art. Sphagnum-moss material is also relatively clean. It is mostly free of weeds and sedge, as well as of woody plants.

It must be understood that the above description and the related figures are only intended to illustrate the present invention. The invention is thus in no way restricted to only the embodiments disclosed or stated in the Claims, but many different variations and adaptations of the invention, which are possible within the scope on the inventive idea defined in the accompanying Claims, will be obvious to one skilled in the art.

## Claims

1. Method for producing plant substrate or litter material, in which method
- organic material (15) is detached mechanically from a lifting area (10),
- the detached material (15) is stored,
- after storage, the material (15) is sent for further processing,
**characterized in that** the organic material is mainly moss biomass (15), which is detached when it is in a frozen state.

2. Method according to Claim 1, **characterized in that** the moss biomass (15) is detached when the frost boundary is in the area of the moss biomass layer (18).

3. Method according to Claim 1 or 2, **characterized in that**, when the moss biomass (15) is detached, at least some of the living moss biomass (12) is left on the surface (11) of the lifting area (10).

4. Method according to any of Claims 1 - 3, **characterized in that** in the frost season driving tracks (13) are made in the lifting area (10) for mechanically detaching the moss biomass (15), which is performed from lifting tracks (20) on both sides of the driving track (13).

5. Method according to any of Claims 1 - 4, **characterized in that**, after the detaching of the moss biomass (15) of the lifting tracks (20), the moss biomass (15) is detached from the driving tracks (13).

6. Method according to any of Claims 1 - 5, **characterized in that**, before the detaching of moss biomass (15), the snow is removed from the surface (11) of the lifting area (10).

7. Method according to any of Claims 1 - 6, **characterized in that** the moss biomass (15) is stored on firm ground (28) outside the lifting area (10).

8. Method according to any of Claims 1 - 7, **characterized in that** the moss biomass (15) is dried when it is stored on an area (28) outside the lifting area (10), while it is isolated at least partly from rain and surface water.

9. Method according to any of Claims 1 - 8, **characterized in that** the thickness of the frozen layer of the lifting area (10) is arranged
- in at least part of the lifting area (13) to carry the weight of lifting and transport machines (14, 25, 27),
- in at least part of the lifting area (20) according to the layer thickness of the moss biomass (15) intended to be detached.

10. Method according to any of Claims 1 - 9, **characterized in that** the lifting area (10) is mainly in a natural state, or a slightly disturbed natural state.

11. Method according to Claim 10, **characterized in that** the lifting area (10) is mainly undrained.

12. Method according to any of Claims 1 - 11, **characterized in that** the detached moss biomass (15) is placed on transfer means (22), using which it is transported away from the lifting area (10) and in which it is dried.

13. Method according to any of Claims 1 - 12, **characterized in that** driving and lifting tracks (13, 20) in the lifting area (10) are formed in a parallel arrangement, in such a way that
- there are two lifting tracks (20) between the driving tracks (13),
- the mutual distance (16) of the driving tracks (13) following each other in the arrangement is arranged according to the reach of the lifting machine (14) used in detaching.

14. Method according to any of Claims 1 - 13, **characterized in that** the moisture content of the moss biomass (15) when it is detached is more than 85 % and more particularly more than 90 %.

15. Method according to any of Claims 1 - 14, **characterized in that** the moss biomass (15) is principally Sphagnum-moss biomass.
